# EUROPEAN PATENT APPLICATION

(11) **EP 2 278 452 A1**
(43) Date of publication of application: **26.01.2011**
(21) Application number: 09251802.6
(22) Date of filing: 15.07.2009
(51) Int. Cl.: G06F 9/38

(54) **Coprocessor programming**

(71) Applicant: NXP B.V., 5656 AG Eindhoven (NL)
(72) Inventor: Hoogerbrugge, Jan NXP Semiconductors, Redhill Surrey RH1 1DL (GB)
(74) Representative: Williamson, Paul Lewis

(57) **Abstract**

A method of operating a processor (201) and coprocessor 203) in an integrated circuit, the method comprising the steps of: the processor (201) providing a series of instructions to the coprocessor (203) via a buffer (202); the coprocessor (203) processing the instructions; and the processor (201) retrieving results of processing the instructions, wherein each of the series of instructions identifies a location in a cache memory (206) for storing the results and the coprocessor (203) provides for each result an indication when the result is available for being retrieved by the processor (201) from the cache memory (206).

## Description

The invention relates to a method of operating a processor and coprocessor in an integrated circuit and to an integrated circuit comprising a processor and one or more coprocessors.

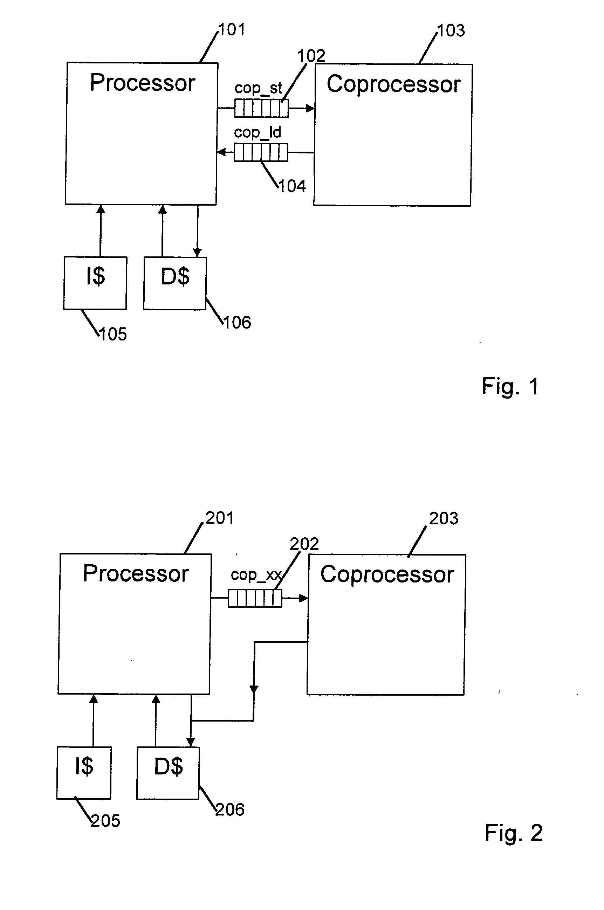

Flexible, cost-effective, high-performance embedded systems are typically implemented with a combination of programmable and dedicated hardware. An example is the video-subsystem of a media processor IC such as the PNX1005 from NXP Semiconductors, in which an NXP^{™} TriMedia^{™} core is connected to a coprocessor. The TriMedia core operates as a media processor, and is configured to provide audio and video encoding / decoding capabilities in an integrated system-on-chip (SoC) implementation. The processor and coprocessor communicate via two buffer queues operating in opposite directions between the processor and the coprocessor, as shown in figure 1. The processor 101 is fed instructions from an instruction cache 105 and operates on data fed from, and read to, a data cache 106. The processor 101 provides a series of instructions to a first buffer queue 102 and the coprocessor 103 receives the instructions in sequence and processes them. The results of the operations the coprocessor 103 is instructed to carry out are fed to a second buffer queue 104. The processor 101 retrieves the results from the second buffer queue 104 in sequence. Each of the queues 102, 104 are FIFO (First-In First-Out) buffers, so the instructions are sent and received in strict order.

In TriMedia implementations, sending a command from the processor 101 to the coprocessor 103 takes place by means of a coprocessor store (cop_st) instruction. Reading the result of such a command takes place by means of a coprocessor load instruction (cop_ld). Because such operations take time to execute on the coprocessor, coprocessor load operations should be executed sufficiently far in time from corresponding coprocessor store operations. Depending on the type of operation, this could take hundreds of clock cycles. If an attempt is made to fetch a result too early, the result will not be available and the processor will stall. Furthermore, for improved performance, execution in the coprocessor 103 should preferably be pipelined, meaning that multiple coprocessor operations are operational at the same time.

The two queues 102, 104 provide the required buffering to allow multiple coprocessor operations to be carried out at the same time. The way MPCoE organizes their interfacing between a programmable processor and a dedicated hardware coprocessor is typical for many embedded systems.

Programming a coprocessor by means of coprocessor stores and loads, for sending commands and reading back results, is a simple method but has several problems.

Firstly, the method of programming such operations is rather primitive, because a programmer has to write coprocessor stores and loads explicitly, making sure that the load operations are only executed once the coprocessor has had the opportunity to provide the results. The processor would otherwise stall on reading from an empty result queue.

Secondly, a compiler cannot reorder coprocessor load and store operations easily because the first-in-first-out (FIFO) ordering of the queues has to be maintained.

Thirdly, the programmer and compiler have to both be aware of the depth of the queues. If too many coprocessor operations are initiated before the results are read back, the system will deadlock because the two queues will be full.

Fourthly, the hold state of each of the queues has be saved and restored on a context switch by the operating system.

It is an object of the invention to address one or more of the above mentioned problems.

In accordance with a first aspect of the invention, there is provided a method of operating a processor and coprocessor in an integrated circuit, the method comprising the steps of:
the processor providing a series of instructions to the coprocessor via a buffer;
the coprocessor processing the instructions; and
the processor retrieving results of processing the instructions,
   wherein each of the series of instructions identifies a location in a cache memory for storing the results and the coprocessor provides for each result an indication when the result is available for being retrieved by the processor from the cache memory.

The buffer connecting the processor and coprocesser, via which the series of instructions is provided, is preferably a FIFO queue.

The cache memory is preferably a data cache holding data for being processed by the processor. The data cache is thereby used for a dual purpose, saving on utilised space and allowing the memory locations to be reconfigured as required.

The cache memory may alternatively be a scratch pad memory, also known as a local or deeply embedded memory. A scratch pad memory is a small and fast memory connected to a programmable processor, used for temporary storage of small items of data for rapid retrieval. Such a memory has advantages of being easier to design and less extensive in terms of chip area and power consumption than a normal cache memory.

The indication of when the result is available may comprise a bit in the cache memory for each identified cache memory location, the coprocessor changing the bit when a corresponding result is available for retrieval by the processor. The processor therefore only has to check the value of one bit to determine if a particular result is available.

A load operation performed by the processor for a result in a memory location indicated by an instruction provided to the coprocessor is preferably stalled until the bit corresponding to the memory location is changed by the coprocessor.

The indication of when the result is available may alternatively be provided by a table in which the cache memory location addresses for results are stored, the processor querying the table when carrying out a load operation for a result.

In accordance with a second aspect of the invention, there is provided an integrated circuit comprising a processor, a coprocessor and a cache memory, the processor being configured to provide a series of instructions to the coprocessor via a buffer and to retrieve the results of the instructions after processing by the coprocessor,
wherein the processor is configured to identify in each instruction an address in the cache memory for storing a corresponding result and the coprocessor is configured to provide for each result an indication when the result is available for being retrieved by the processor from the cache memory.

In a general aspect, the invention provides a system comprising a programmable processor and a coprocessor wherein the coprocessor provides results that are readable by the processor at a time the processor chooses, rather than in strict order, provided this is done once an indication is provided from the cache memory. In preferred embodiments, a busy bit is associated with each word in a data cache where the results are stored, the busy bit indicating whether the result from the coprocessor is present or not.

An advantage of the invention is that a programmer and compiler can provide instructions to the processor in a more efficient manner, for example by allowing more flexibility in how load operations are carried out. A compiler is therefore able to compress certain looped operations that would otherwise need to be carried out consecutively.

A system incorporating a processor and coprocessor operating according to the invention is expected to be easier to program, because only buffered operation needs to be considered instead of two operations used in existing systems. The programmer does not therefore need to be as concerned with avoiding reordering operations, which do not need necessarily need to be in strict order to obtain the most efficient operation.

Programming is also easier because the programmer does not need to be as concerned about queue sizes, as the data cache acts as a random access buffer.

Unlike previous implementations, the coprocessor state does not need to be saved on a context switch, because no output buffer is used.

Using the data cache for the results also allows fewer scheduling dependencies, allowing a compiler more flexibility in providing more efficient instructions to the processor.

Embodiments of the invention are described by way of example in more detail below, with reference to the appended drawings, in which:
figure 1 is a schematic block diagram of an existing processor and coprocessor arrangement;
figure 2 is a schematic block diagram of a processor and coprocessor arrangement in accordance with embodiments of the invention; and
figure 3 is a schematic flow diagram of an embodiment of a method according to the invention.

The processor and coprocessor arrangement shown in figure 1 has already been described above.

An embodiment of a system according to the invention is illustrated in figure 2. In this, the processor 201, in response to instructions provided from an instruction cache 205, directs coprocessor store (cop_xx) instructions via a buffer 202 to the coprocessor 203, as in the arrangement described above in relation to figure 1. The coprocessor operations are programmed as normal custom operations, but in addition have as a target specifier a memory address where the result of each operation should be stored. When such an operation is executed it is sent to the coprocessor 203 along with the target memory address for the result, which is then stored in the data cache 206.

Each word in the data cache 206 has a corresponding busy bit that indicates whether the corresponding word is present or is being computed on the coprocessor 203. When a coprocessor operation is initiated by the processor 201, the busy bit of a target address is set to indicate that the data is not yet present. The busy bit may be initially set by the processor 201 or the coprocessor 203. When the relevant coprocessor operation completes on the coprocessor 203, the result produced is sent to the data cache 206 of the processor 201 and the corresponding busy bit is cleared by the coprocessor. The processor can then access the result.

If a load operation attempts to access a word in the data cache 206 with a busy bit that is still set, the load operation stalls until the coprocessor 203 has cleared the busy bit. This ensures that valid data is returned.

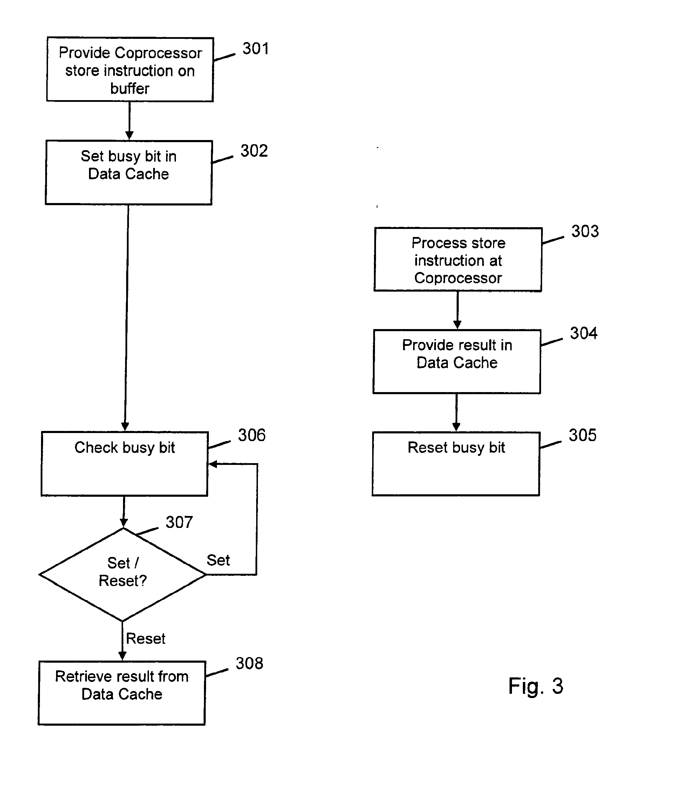

A simplified flow chart of an operation involving a single instruction provided by the processor 201 to the coprocessor 203 is illustrated in figure 3. Steps 301, 302 and 306-308 are carried out by the processor, while steps 303-305 are carried out by the coprocessor. The relative position of the steps carried out by the coprocessor compared with those carried out by the processor indicates the order in which operations are performed.

The processor 201 provides (step 301) an instruction by loading a store instruction on the buffer 202. The store instruction specifies a location in the data cache 206, and a corresponding busy bit is set (step 302), in this case by the processor 201. At some later point, once the instruction has propagated through the buffer 202, the coprocessor processes the store instruction (step 303), and then provides the result in the data cache 206 (step 304). As the result is provided, the coprocessor 203 resets the busy bit corresponding to the location in which the result is stored.

When the processor is ready to retrieve the result, the busy bit associated with the location is checked (step 306). If the busy bit is still set, the processor waits until the busy bit has been reset by the coprocessor (step 307) before the result is retrieved (step 308).

It is to be understood that the sequences of operations shown in figure 3 and described above are highly simplified and only represent one instruction being stored and one result being loaded. In practice, the processor and coprocessor will be operating on many instructions at any given time, and the processor will be providing further instructions to the coprocessor while waiting for the coprocessor to provide results for previously provided instructions.

The method of operation described herein solves the aforementioned problems of known systems, at the cost of an extra busy bit per word in the data cache 206 and a somewhat more complex overall design. The method results in an increased use of the data cache, but the benefits of being able to more efficiently program operation of the processor are expected to outweigh these perceived difficulties.

Although the above described embodiment involves one processor coupled to a single coprocessor, the principle but can readily extended to multiple coprocessors. Where more than one coprocessor is used with a processor, each coprocessor can return results to the same data cache, since the processor decides which memory locations to use for each result.

An alternative approach to the use of busy bits in the data cache 206 is the use of a table with addresses of the words that are targeted by coprocessor operations in flight. Such a table may be queried on every load operation.

Instead of using the data cache memory 206, a scratch pad memory may be implemented for storing results from the coprocessor(s).

Other embodiments are also envisaged to be within the scope of the invention, which is defined by the appended claims.

## Claims

1. A method of operating a processor (201) and coprocessor (203) in an integrated circuit, the method comprising the steps of:
the processor (201) providing a series of instructions to the coprocessor (203) via a buffer (202);
the coprocessor (203) processing the instructions; and
the processor (201) retrieving results of processing the instructions,
wherein each of the series of instructions identifies a location in a cache memory (206) for storing the results and the coprocessor (203) provides for each result an indication when the result is available for being retrieved by the processor (201) from the cache memory (206).

2. The method of claim 1 wherein buffer is a FIFO queue (202).

3. The method of claim 1 or claim 2 wherein the cache memory is a data cache (206) holding data for being processed by the processor (201).

4. The method of claim 1 or claim 2 wherein the cache memory is a scratch pad memory.

5. The method of any preceding claim wherein the indication comprises a bit in the cache memory (206) for each identified cache memory location, the coprocessor (203) changing the bit when a corresponding result is available for retrieval by the processor (201).

6. The method of claim 5 wherein a load operation performed by the processor (201) for a result in a memory location indicated by an instruction provided to the coprocessor (203) is stalled until the bit corresponding to the memory location is changed by the coprocessor (203).

7. The method of any one of claims 1 to 4 wherein the indication is provided by a table in which the cache memory location addresses for results are stored, the processor (201) querying the table when carrying out a load operation for a result.

8. An integrated circuit comprising a processor (201), a coprocessor (203) and a cache memory (206), the processor (201) being configured to provide a series of instructions to the coprocessor (203) via a buffer (202) and to retrieve the results of the instructions after processing by the coprocessor (203),
wherein the processor (201) is configured to identify in each instruction an address in the cache memory (206) for storing a corresponding result and the coprocessor (203) is configured to provide for each result an indication when the result is available for being retrieved by the processor from the cache memory (206).
